Europäisches Patentamt

European Patent Office

Office européen des brevets

(19)

(11) Veröffentlichungsnummer: **0 100 020**
**B1**

(12)
# EUROPÄISCHE PATENTSCHRIFT

(45) Veröffentlichungstag der Patentschrift:
04.06.86

(51) Int. Cl.⁴: **A 01 F 15/08**

(21) Anmeldenummer: **83106788.9**

(22) Anmeldetag: **11.07.83**

(54) **Anordnung an einer Presse zum Einbringen einer flüchtigen Behandlungsflüssigkeit in das Erntegut.**

(30) Priorität: **12.07.82 US 397303**

(43) Veröffentlichungstag der Anmeldung:
**08.02.84 Patentblatt 84/6**

(45) Bekanntmachung des Hinweises auf die Patenterteilung:
**04.06.86 Patentblatt 86/23**

(84) Benannte Vertragsstaaten:
**DE FR GB IT**

(56) Entgegenhaltungen:
**GB - A - 1 281 086**
**US - A - 4 185 549**

(73) Patentinhaber: **DEERE & COMPANY, 1 John Deere Road, Moline Illinois 61265 (US)**

(72) Erfinder: **Rabe, David Lee, 504 Indian Trail Road, Ottumwa Iowa 52501 (US)**
Erfinder: **Hudson, Colin Munroe, 3459 - 49th Street, Moline Illinois 61265 (US)**

(74) Vertreter: **Fricke, Joachim, Dr. et al, Dr. R. Döring, Dr. J. Fricke, Patentanwälte Josephspitalstrasse 7, D-8000 München 2 (DE)**

## Beschreibung

Die Erfindung betrifft eine Anordnung an einer Presse zur Herstellung von Ballen aus Erntegut zum Einbringen einer Behandlungsflüssigkeit in das Erntegut während des Ausformens in einen Ballen mit den Merkmalen des Oberbegriffs des Anspruchs 1.

Derartige Anordnungen sind bekannt, z. B. aus der US-A-4 185 549. Bei dieser bekannten Anordnung handelt es sich um eine Anordnung an einer Ballenpresse für rechteckförmige Ballen, z. B. aus Heu, mit einem langgestreckten Ballenbildungskanal, in dem ein Presskolben hin und her bewegbar ist. In dem Presskolben sind stirnseitig mehrere vorspringende Einbringungsdüsen vorgesehen, die jeweils einen inneren Längskanal und von diesem ausgehende radiale Austrittsöffnungen aufweisen. Die Einbringungsdüsen sind mit einem Verteilersystem in dem Kolben, einer Zumesskammer für eine vorbestimmte Menge Behandlungsflüssigkeit einer Ventileinrichtung und einer Kurvensteuerung versehen, welche dazu dient, die Behandlungsflüssigkeit den Düsen in Abhängigkeit vom Arbeitszyklus des Presskolbens zuzuführen, so dass jeweils beim Presshub des Kolbens eine vorbestimmte Menge Einbringungsflüssigkeit in das durch den Kolben zusammengepresste Gut eingebracht wird.

Die tatsächlichen Vorteile für solche Behandlungsflüssigkeiten sind bekannt. Dazu gehört, dass das Erntegut mit wesentlich höherem Feuchtigkeitsgehalt ohne Verderb gepresst und gespeichert werden kann. Auch werden wegen der höheren Feuchtigkeit Erntegutverluste auf dem Feld, insbesondere Blattverluste, klein gehalten. Auch ist der Erntevorgang weniger abhängig von günstigen Wetterbedingungen. Auch wird das Erntegut leichter aufgenommen und verdaut und weist schliesslich einen höheren Nährstoffgehalt auf. Die relative Bedeutung dieser Vorteile hängt ab von der Art des Erntegutes und der Art der verwendeten Behandlungsflüssigkeit.

Es treten jedoch einige Probleme auf, insbesondere wenn hochflüchtige Behandlungsflüssigkeiten wie Ammoniak verwendet werden. Hierbei treten insbesondere hohe Dampfverluste an Behandlungsflüssigkeiten auf. Ausserdem ist keine gleichförmige Verteilung über die ganze Heumenge gewährleistet und schliesslich ist die Rückhaltefähigkeit des Ammoniaks im Heu zu gering, um schädliche Organismen zu zerstören.

Die Erfindung ist bevorzugt anwendbar bei kleinen Ballenpressen für rechteckförmige Ballen.

Eine solche Vorrichtung zeigt die oben genannte US-A-4 185 549. Gegenüber dieser bekannten Anordnung ist jedoch festzustellen, dass auch bei dieser die Gleichförmigkeit der Verteilung der Behandlungsflüssigkeit im Erntegut und die Verminderung der Flüssigkeitsverluste durch Verdampfen noch zu wünschen übrig lassen. Die Verluste an Behandlungsflüssigkeit, insbesondere hochflüchtiger Behandlungsflüssigkeit führen zu erheblichen Kosten und einem relativ hohen Aufwand, ausserdem besteht die Gefahr, dass doch an örtlich begrenzten Stellen eines Ballens ein Verderb einsetzt, der schliesslich den ganzen Ballen befallen kann. Da ausserdem die Behandlungsflüssigkeit für die Bedienungsperson auf Augen, Nase und Lungen irritierend wirkt, kann der Austritt grösserer Mengen an Behandlungsflüssigkeit und bei ungünstiger Windrichtung sehr nachteilig sein. Hinzu kommt, dass die Absorption von Ammoniak als Behandlungsflüssigkeit in einer Pflanze z. B. bei Alfa Alfa bei Temperaturen unterhalb der Umgebungstemperatur, wie sie normalerweise bei Heuerntevorgängen vorliegt, wesentlich höher ist. Es ist daher wünschenswert, dass die Behandlungsflüssigkeit in der Düse als Flüssigkeit zurückgehalten wird und dass die Verdampfung und eine rasche Abkühlung unmittelbar bei Austrieb auftritt, um die Absorption der Behandlungsflüssigkeit in dem Erntegutmaterial zu fördern.

Es ist daher Aufgabe der Erfindung, eine Anordnung mit den Merkmalen des Oberbegriffs des Anspruchs 1 so weiterzubilden, dass eine wesentlich wirksamere und gleichmässigere Verteilung der Behandlungsflüssigkeit in dem entstehenden Ballen gewährleistet ist und die Verluste an Behandlungsflüssigkeit durch Verdampfung so klein wie möglich gehalten werden.

Diese Aufgabe wird durch die Merkmale des Anspruchs 1 gelöst.

Aufgrund dieser Ausbildung wird gewährleistet, dass in den Düsen die flüchtige Erntegutbehandlungsflüssigkeit unter Druck zurückgehalten wird und dass die Anordnung so getroffen ist, dass die Flüssigkeit mit erhöhter Geschwindigkeit in das Erntegut eingebracht wird, so dass einerseits eine bessere Verteilung über den gesamten Querschnitt des Ernteguts und eine rasche Abkühlung des Mediums bei Eintritt in das Heu gewährleistet ist. Ausserdem soll gewährleistet werden, dass die Düse weniger anfällig gegenüber Verstopfen durch Fremdstoffe ist. Dabei ist es wichtig, dass ein rascher Druckaufbau zur Erzielung optimaler Einbringungsverhältnisse gewährleistet ist.

Die Beziehung der Querschnittsflächen des Längskanals zu den Querschnittsflächen der Öffnungen liefert eine Einschnürung in dem Weg der Fluidströmung. Dadurch wird die Flüssigkeit unter hohem Druck oberhalb der Einschnürung zurückgehalten. Die Aufrechterhaltung eines hohen Druckes für die flüchtige Erntegutbehandlungsflüssigkeit in der Düse führt dazu, dass das Behandlungsmittel in der flüssigen Form zurückgehalten wird.

Die Austrittsöffnungen weisen vorteilhafterweise jeweils neben einer Einschnürung eine neben der Einschnürung nach aussen divergierende Lippe auf. Hierdurch wird ein störungsfreier Betrieb und grosse Unempfindlichkeit gegen Verstopfen durch Festkörper oder dgl. erreicht. Die Einschnürung in den Strömungsweg der Düsenanordnung erzeugt einen Venturi-Effekt. Hierdurch wird die Strömungsgeschwindigkeit der eingebrachten Flüssigkeit wesentlich erhöht. Sie fördert eine intensive und gleichförmige Verteilung des Mittels über den ganzen Querschnitt und die Tiefe des verdichteten Erntegutes.

Vorteilhafterweise sind an einer die Stirnfläche des Kolbens bildenden Wand Anschlussnippel vorgesehen, welche durch die Wand ragen. An denen sind mit einem Ende die Düsen befestigt. Weiterhin sind mehrere, durch Elektromagnete betätigbare Ventile vorgesehen, die jeweils an dem anderen inneren Ende des betreffenden Nippels befestigt sind. Die Ausbildung mit Montagenippeln vereinfacht den Aufbau und die Montage ebenso ausserordentlich wie etwaige Wartung oder Reparaturen. Ausserdem werden durch die Nippel die Düsen und die diese steuernden Ventile ausserordentlich dicht zueinandergebracht, so dass ein ausserordentlich rascher Druckaufbau bei Betätigung der Ventile stattfindet und ausserdem die zwischen den Ventilen und den Austrittsöffnungen vorhandene Flüssigkeitsmenge klein ist, so dass auch bei Schliessen der Ventile nur eine kleine Menge an Flüssigkeit verdampfen kann. Besonders vorteilhaft ist es, wenn unmittelbar vor den Austrittsöffnungen ein Rückschlagventil dem Längskanal zugeordnet ist, welches den Grossteil der Flüssigkeit in dem Längskanal zurückhält, wenn die Ventile geschlossen sind, so dass dadurch die Flüssigkeitsverluste weiterhin stark verringert werden.

Die Erfindung wird nachfolgend anhand schematischer Zeichnungen an mehreren Ausführungsbeispielen näher erläutert.

Es zeigen:

Fig. 1 eine schematische Draufsicht auf eine Ballenpresse mit einer Anordnung gemäss der Erfindung;

Fig. 2 zeigt im grösseren Massstab und in perspektivischer Darstellung den Kolben der Ballenpresse nach Fig. 1 mit den Injektionsdüsen zum Einbringen der Behandlungsflüssigkeit;

Fig. 3 in weiter vergrössertem Massstabe und im Längsschnitt die Injektionsdüse, wobei der Schnitt entlang der Schnittebene III–III in Fig. 2 geführt ist;

Fig. 4 in weiter vergrössertem Massstabe einen Querschnitt entlang der Schnittlinie IV–IV der Fig. 3;

Fig. 5 in weiter vergrössertem Massstabe das vordere Ende der Injektionsdüse in abgewandelter Ausführungsform;

Fig. 6 in Form eines Schaltdiagramms die Steuereinrichtung bei der Anordnung gemäss der Erfindung;

Fig. 7a und 7b Einzelheiten einer bevorzugten Ausführung des Steuerkreises nach Fig. 6, wobei die Fig. 7a und 7b an den Punkten a bis h ineinander übergehen, und

Fig. 8 ein Pulszeitdiagramm für den Steuerkreis nach Fig. 7a und 7b.

Zunächst wird die bevorzugte Ausführungsform der Anordnung gemäss der Erfindung allgemein beschrieben.

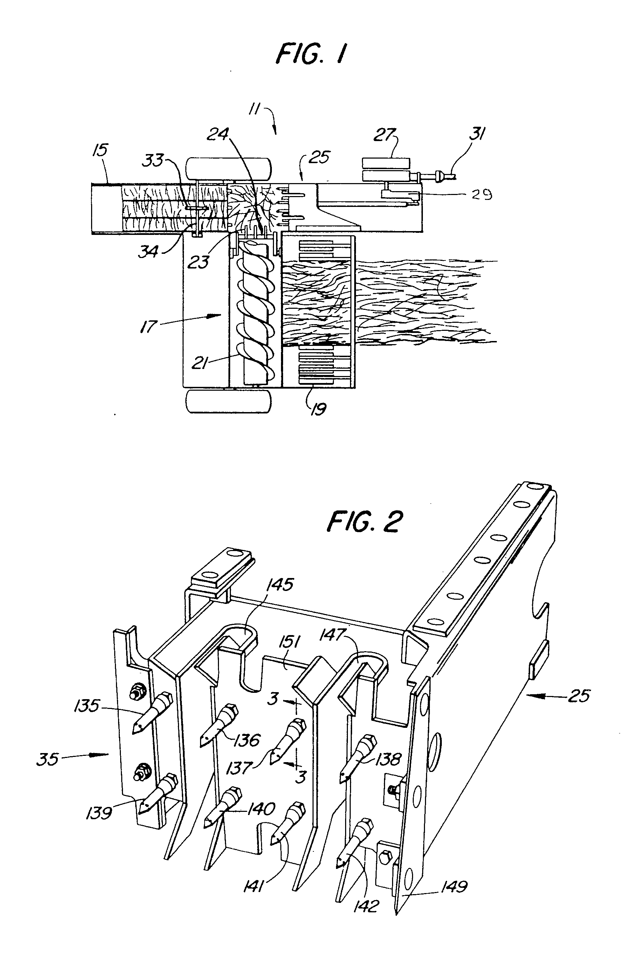

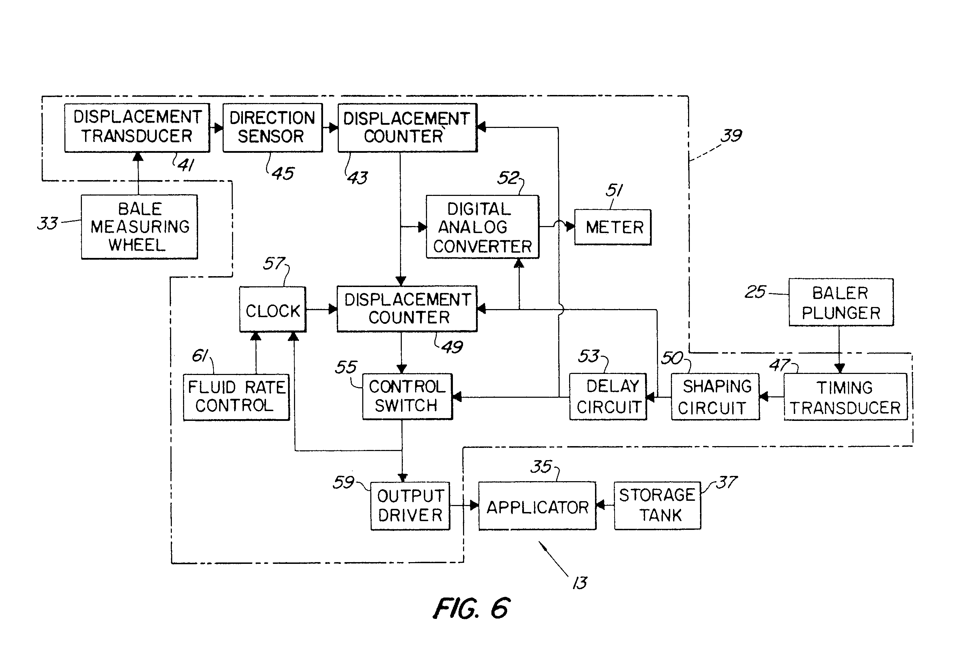

In Fig. 1 ist die bevorzugte Art der Ballenpresse 11 gezeigt, bei der die Anordnung 13 nach Fig. 6 eingesetzt wird. Die Ballenpresse 11 ist von üblichem Aufbau und weist eine kanalförmige Ballenbildungskammer 15, einen Aufsammler und Förderer 17 zum Aufnehmen des Erntegutes vom Boden und zum Einbringen in die Ballenbildungskammer 15 auf. Die Aufsammel- und Fördereinrichtung 17 umfasst einen rotierenden Aufnehmer 19 zur Aufnahme des Gutes vom Boden, eine Zusammenführungsschnecke 21, der das aufgenommene Erntegut zugeführt wird und mehrere Förderzähne 23, welche das Erntegut in die Ballenbildungskammer 15 durch eine seitliche Kammeröffnung 24 einbringen. Die Presse 11 umfasst weiterhin einen zyklisch betätigbaren Kolben 25 zum Verdichten und Vorwärtsbewegen des Erntegutes durch die Kammer 15. Der Kolben 25 wird über ein Schwungrad 27 und einen Kurbelarm 29 zwischen Schwungrad 27 und Kolben 25 angetrieben. Das Schwungrad 27 wird durch Verbindung mit der Zapfwelle 31 eines Ackerschleppers angetrieben, der die Presse über das Feld zieht. Wenn der Kolben 25 sich in die Kammer 15 bewegt, presst er eine neue Ladung Heu, die gerade durch die Zuführungszähne 23 in die Kammer 15 eingeführt ist, zusammen. Der Zuführungsprozess des Heus in die Kammer 15 und das Pressen mit Hilfe des Kolbens 25 wird zyklisch wiederholt, bis ein Ballen fertiggestellt ist. Ein Ballenmessrad 33 ist drehbar auf der Oberseite der Kammer 15 montiert und läuft um in Abhängigkeit von der Vorwärtsbewegung des Ballens durch die Kammer 15. Wenn das Rad 33 einen vorbestimmten Zyklus vollendet hat, wird ein Zeitmechanismus, der nicht gezeigt ist, ausgelöst, um einen Bindemechanismus (nicht gezeigt) in Gang zu setzen. Die Ballenlänge wird dadurch eingestellt, dass man den Ballenmesszyklus des Rades 33 einstellt.

In den Fig. 2 bis 4 ist der Kolben 25 mit der Anordnung 35 nach der Erfindung gezeigt. Die Anordnung 35 umfasst eine Anzahl von Düsen 135 bis 142, um eine flüchtige Erntegutbehandlungsflüssigkeit in das Erntegut in der Kammer 15 einzubringen. Der Kolben 25 umfasst zwei Kanäle 145, 147, durch die die Bindenadel während des Bindezyklus hindurchgreifen kann sowie ein Kolbenmesser 149, welches die Heureste abschneidet, die sich nicht vollständig in der Kammer 15 befinden, wenn der Kolben 25 in der Kammer 15 zum Zusammenpressen einer neuen Heuladung nach rückwärts bewegt wird. Der Kolben 25 ist üblicher Bauart mit Ausnahme der Düsenanordnung 135 bis 142, welche nach vorne vorspringend von einer Stirnwand 151 montiert sind, welche die an das Heu angreifende Stirnfläche des Kolbens 25 bildet.

Die Düsen 135 bis 142 sind identisch. Es braucht daher nur die Düse 137 im einzelnen beschrieben zu werden. Diese umfasst einen langgestreckten hohlen Schaft 153 mit einem Längskanal 155. An einem Ende des Schaftes sind mehrere Öffnungen 157 bis 160 ausgebildet und stehen mit dem zentral angeordneten Längskanal 155 in Verbindung. Um eine im hohen Masse flüchtige Erntebehandlungsflüssigkeit unter einem wesentlichen Druck in den Düsen 137 zu halten, weist der Kanal 155 eine Querschnittsfläche auf, die grösser ist als die kleinste Summe der Querschnittsflächen der Öffnungen 157 bis 160. Um eine gleichförmige Verteilung mit hoher Geschwindigkeit der Erntegutbehandlungsflüssigkeit von der Düse 137 zu unterstützen umfasst jede Öffnung 157 bis 160 eine Einschnürung 163 bis 166 sowie Lippen 167 bis 170. Damit besitzen die Öffnungen 157 bis 160 einen nach aussen zunehmenden Querschnitt oder zunehmende Querschnittsfläche. Die Einschnürung 163 bis 166 bildet so eine Drosselstelle im Strömungsweg der Flüssigkeit zwischen dem Längskanal 155 und den Lippen 167 bis 170. In Übereinstimmung mit dem bekannten Venturi-Effekt führt dies zu einem Austreiben der Flüssigkeit aus den Öffnungen 157 bis 160 mit hoher Geschwindigkeit. Die nach aussen divergierenden Lippen 163 bis 166 vermindern ausserdem die Tendenz der Öffnungen sich mit Fremdkörpern zuzusetzen.

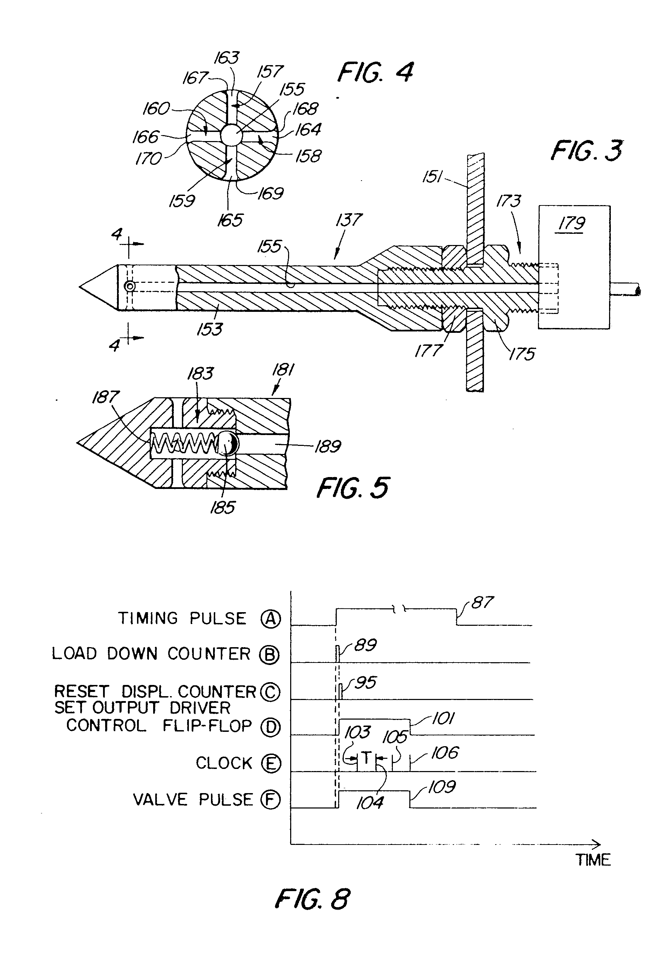

Jede Düse 135 bis 142 ist an in Abstand liegenden Stellen der Stirnfläche des Kolbens 25 mit Hilfe von Nippeln 173 (siehe Fig. 3) montiert, von denen sie nach vorne vorspringen. Die Montage der Düsen am Kolben 25 ist in jedem Fall identisch. Es braucht daher nur die Montage der Düse 137 auf dem Nippel 173 gezeigt zu werden. Der Nippel 173 wird durch die Wand 151 gesteckt und mit Hilfe eines Anschlages 175 an dem Nippel 173 und einer Mutter 177 festgelegt. Der äussere Umfang des Nippels 173 weist Gewinde auf, so dass ein einfaches Montieren des Nippels 173 in der Stirnwand 151 des Kolbens möglich ist und ebenso einfach die Düse 137 auf dem Nippel 173 durch Aufschrauben erreicht wird, was den einfachen Aufbau, die einfache Montage und ein leichtes Auswechseln bzw. eine leichte Wartung des Systems ermöglicht.

Die Anordnung 35 umfasst ferner ein übliches durch Magnetspule betätigbares Ventil 179 (es ist nur eins gezeigt), das am anderen Ende des Nippels 173 montiert ist, um die Überführung der Flüssigkeit von einem Vorratstank 37 nach Fig. 6 zur Düse 137 zu steuern. Das Ventil 179 liegt sehr nahe der Düse 137, so dass ein rascher Druckaufbau in der Düse 137 zur raschen Optimierung der Arbeitsbedingungen unterstützt wird. Die grosse Nähe von Ventil 179 und Düsen 137 vermindert auch die Verluste an Flüssigkeit, wenn das Ventil 179 geschlossen wird.

Fig. 5 zeigt eine alternative Ausführungsform für die Düse 181 zur Anwendung bei der Anordnung 35. Die Düse 181 ist weitgehend mit der Düse 137 identisch mit der Ausnahme, dass ein auf Druck ansprechendes Rückschlagventil 183 im Ende der Düse 181 montiert ist, um weiterhin die Verluste an Erntebehandlungsflüssigkeit zu verringern, die in der Düse nach Schliessen des Ventils 179 zurückgehalten wird. Das Rückschlagventil 183 umfasst eine Ventilkugel 185 und eine Feder 187, welche ein Schliessen der Kugel 185 zur Abdichtung des Längskanals 189 veranlasst, um einen weiteren Austritt der Flüssigkeit nach Schliessen des Ventils 179 zu verhindern. Das durch Feder gesteuerte Ventil 183 ist vorzugsweise so eingestellt, dass eine Strömung ermöglicht wird bei Drücken, die etwas grösser sind als der Dampfdruck der Behandlungsflüssigkeit (Ammoniak) unter den auf dem Feld herrschenden Temperaturen. Dies bedeutet, dass der Vorratstank 37 unter einem etwas höheren Druck gehalten werden muss oder durch eine entsprechende Pumpe unter Druck gesetzt werden kann.

Es ist ersichtlich, dass in Übereinstimmung mit den Merkmalen dieser Erfindung der Düsensatz 135 bis 142 dafür sorgt, dass die flüchtige Erntegutbehandlungsflüssigkeit unter Druck und damit in der flüssigen Form zurückgehalten wird und die Dampfbildung verhindert wird, und zwar insbesondere dadurch, dass der Minimumwert der Summe der Querschnittsflächen der Öffnungen 157 bis 160 kleiner gehalten wird als die maximale Querschnittsfläche des Längskanals 155. Gemäss einer Ausführungsform der Erfindung, wie sie für die Einbringung von Ammoniak als Behandlungsflüssigkeit geeignet ist, weist der Längskanal 155 eine Querschnittsfläche von 10,24 mm$^2$ auf. Jede der Öffnungen 157 bis 160 weist einen kleinsten Querschnitt mit einer Fläche von 1,96 mm$^2$ und damit eine Querschnittsflächensumme der Öffnungen von 7,84 mm$^2$ auf.

Dadurch, dass jede der Öffnungen 157 bis 160 in der Öffnungsweite nach aussen divergiert, wird der Erntegutbehandlungsflüssigkeit eine hohe Geschwindigkeit erteilt, was die gleichförmige Verteilung der Flüssigkeit über die ganze Heucharge wesentlich erleichtert. In Übereinstimmung mit den oben diskutierten Beispielen können die Lippen 167 bis 170 mit einem nach aussen divergierenden Winkel von 60° gegenüber einer Achse angeordnet sein, die zentral in jeder Öffnung gedacht werden kann.

Weitere Merkmale der Erfindung bestehen in der Verwendung eines rasch schliessenden, durch Elektromagnetspule betätigten Ventils 179 in Verbindung mit dem Rückschlagventil 183. Hierdurch wird der Verlust an flüchtiger Erntegutbehandlungsflüssigkeit weiter wesentlich verringert.

In Fig. 6 ist die Anordnung 13 und ein zugehöriger Steuerkreis 39 zur automatischen Steuerung der Anbringungsgeschwindigkeit der Erntebehandlungsflüssigkeit in das Erntegut gezeigt. Dadurch wird es möglich, die Einbringungsgeschwindigkeit in Abhängigkeit von der Ballenbildungsgeschwindigkeit zu steuern.

Das System 14 umfasst eine Anbringungsanordnung 35 zur Einbringung der Erntegutbehandlungsflüssigkeit in das Erntegutmaterial, das in einen Ballen überführt wird. Ein Vorratstank 37 nimmt die Erntegutbehandlungsflüssigkeit unter Druck auf und speist sie der Anbringungsvorrichtung 35 zu. Der Steuerkreis 39 dient zur Steuerung der Einbringungsgeschwindigkeit. Die Ballenbildungsgeschwindigkeit wird hier als das Gewicht des Erntegutes pro Zeiteinheit definiert, das vom Feld aufgesammelt und in die Ballenformkammer gefördert und dort in einen Ballen umgeformt wird. In Übereinstimmung mit der bevorzugten Ausführungsform wird die Ballenbildungsgeschwindigkeit festgestellt durch Messung der Verschiebegeschwindigkeit der Erntegutcharge durch die Ballenkammer 15 und insbesondere durch die Verschiebung der Erntegutcharge durch die Ballenformkammer 15 bei jedem einzelnen Arbeitszyklus des Kolbens 25. Die Messung der Verschiebung der Erntegutcharge durch die Kammer 15 erfolgt mit Hilfe eines Vorschub-Wandlers 41. Dieser kann in einer bevorzugten Ausführungsform eine Wellenkodiereinrichtung aufweisen, die an der Welle 34 angebracht ist, auf der das Rad 33 befestigt und mit der Welle drehbar ist, wenn eine Heuladung rückwärts durch die Kammer 15 bewegt wird. Das Ausgangssignal des Vorschubwandlers 41 ist in digitaler Form und wird einem ersten Vorschubzähler 43 zugeführt und in diesem gespeichert. Ein Richtungsfühler 45 liegt zwischen dem Wandler 41 und dem Zähler 43, um eine Überführung eines Signals zu dem Vorschubzähler 43 zu verhindern, wenn es sich um ein Signal bei einer Rückwärtsdrehung des Rades 33 handelt, welches repräsentativ für eine Bewegung der Heuladung in entgegengesetzter oder rückwärtiger Richtung durch die Kammer 15 ist. Eine solche Radbewegung 33 tritt nach einem Verdichtungshub des Kolbens 25 auf, wenn der Kolben wieder zurückgezogen wird, um die Einführung einer neuen Erntegutladung in die Kammer 15 durch die Förderzähne 23 zu ermöglichen. Hierbei kann sich die zuvor verdichtete Charge wieder etwas in der Kammer 15 ausdehnen. Das Vorschubsignal bleibt in dem Zähler 43 gespeichert, bis ein Zeitgeberwandler 47 ein Zeitgebersignal an einem vorbestimmten Punkt während des Hubes des Kolbens 25 erzeugt. In der bevorzugten Ausführungsform ist der Zeitgeberwandler 47 so eingestellt, dass er ein Zeitgebersignal während des Abschnittes des Kolbenzyklus erzeugt nach dem Schliessen der Kammeröffnung 24 durch den Kolben 25 und vor dem vollen Verdichtungshub des Kolbens 25 in der Kammer 15. Das Zeitsignal sollte in ausreichender Zeit injiziert werden, so dass die Anbringung der Flüssigkeit zu Ende geführt ist, solange die Öffnung 24 durch den Kolben 25 noch geschlossen ist, um so die Verluste an Behandlungsflüssigkeit zu verringern. Das Zeitgebersignal gelangt durch einen Signalformkreis 50 (a), der Störsignale ausfiltert, die z. B. durch einen mechanischen Schalter verursacht werden, der in dem Zeitgeberwandler verwendet wird sowie durch einen Aufgleitkontakt an einem Getriebeteil (nicht gezeigt) in dem Antriebszug der Ballenpresse, welcher Kontakt eine Umdrehung oder einen Zyklus bei jedem Kolbenzyklus 25 ausführt und der (b) die Impulsbreite des Zeitgebersignals verringert. Die verringerte Breite des Zeitgebersignals wird zu einem zweiten Vorschubzähler 49 geleitet, wobei die Ladung des Vorschubsignals aus dem ersten Zähler 43 auf den zweiten Zähler 49 und zu einem Vorschubmessgerät 51 gelangt. Das aus dem Formkreis 50 austretende Zeitgebersignal gelangt ausserdem zu einem Verzögerungskreis 53, der einen Steuerschalter 55 einstellt und den Vorschubzähler 53 auf den Null-Wert zurückstellt, so dass er das nächste Vorschubsignal von dem nächsten Kolbenzyklus empfangen kann. Die Einstellung des Steuerschalters 55 führt zur Auslösung eines Zeitgebers 57, der eine Serie von zeitgesteuerten Impulsen erzeugt, welche schrittweise den eingespeicherten Wert aus dem Zähler auslesen, bis der Zählwert Null erreicht ist. Gleichzeitig mit der Betätigung der Uhr 57 betätigt der Steuerschalter 55 einen Ausgangstreiberkreis 59, der seinerseits die Anbringungseinrichtung 35 einschaltet, so dass Erntegutbehandlungsflüssigkeit in das durch den Kolben 25 in der Kammer 15 zusammengepresste Erntegutmaterial eingebracht wird, bis im Zähler 49 der Zählwert Null erreicht ist. Wenn der Zählwert Null im Zähler 49 erreicht wird, wird die Schalteinrichtung 55 in die Abschaltstellung zurückgestellt, wodurch der Ausgangstreiberkreis 59 abgeschaltet wird, und damit auch die Einbringungsrichtung 35 und die Uhr 57. Jeder Impuls des Zeitgebers 57 repräsentiert eine Verschiebeeinheit des Vorschubwandlers 41.

Eine die Strömungsgeschwindigkeit steuernde Einrichtung 61 reguliert die Zeit zwischen den Impulsen der Uhr 57, die ihrerseits die Einschaltzeit der Einbringungseinrichtung 35 steuert. Dadurch wird die Menge an Behandlungsflüssigkeit eingestellt, die pro Einheit der Vorschubbewegung des Ballens in das Erntegut eingebracht wird.

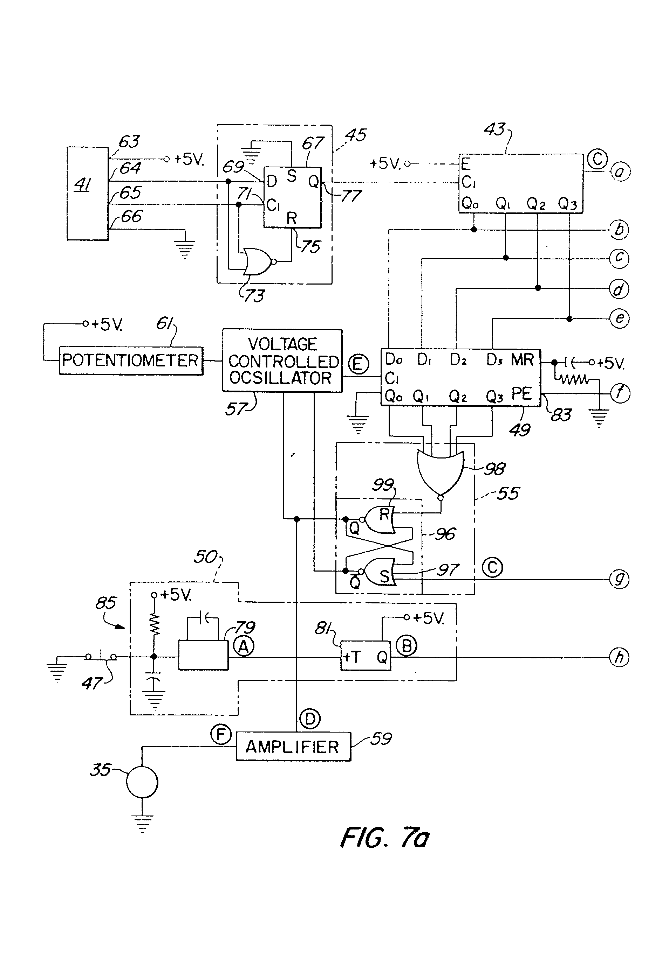

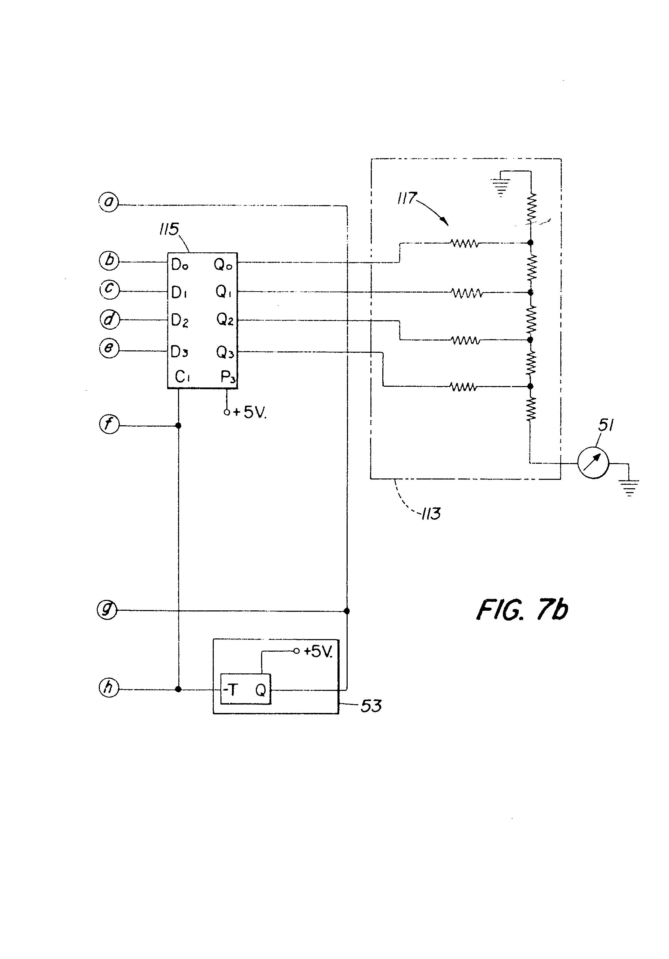

Die Fig. 7a und 7b zeigen im einzelnen eine bevorzugte Ausführungsform des Anbringungssteuerkreises 39, das in Blockschaltbild in Fig. 6 und Fig. 8 gezeigt ist. Fig. 8 zeigt ein Zeitdiagramm der Wellenformen in Abhängigkeit von der Zeit an verschiedenen Stellen in dem Kreis 39. Für den Fachmann ist ersichtlich, dass der Steuerkreis 39 auf unterschiedliche Weise verwirklicht werden kann. Die Fig. 7a und 7b zeigen lediglich ein repräsentatives Ausführungsbeispiel für den Steuerkreis zur Überwachung der Anbringungsgeschwindigkeit der Behandlungsflüssigkeit in Abhängigkeit von der Ballenbildungsgeschwindigkeit.

Der Vorschubwandler 41 misst die Drehung der Welle 34 des Rades 33 und kann eine übliche Wellenkodiereinrichtung sein, welche einen Ausgangsimpuls für jeweils einen Drehwinkel der Welle 34 von 6° erzeugt. Die Wellenkodiereinrichtung 41 ist mit einem Richtungsfühler 45 verbunden. Dieser kann z. B. durch einen Flip-Flop 67 vom Typ D und durch ein NOR-Gatter 73 gebildet sein. Hierdurch wird sichergestellt, dass ein digitales Signal von der Kodiereinrichtung 41 in Abhängigkeit von einer Rückwärtsdrehung der Welle 34 nicht dem Vorschubzähler zugeführt und in diesem gespeichert wird. Die Wellenkodiereinrichtung 41 umfasst vier Anschlüsse 63 bis 66, wobei der Anschluss 63 mit einer Spannungsquelle, der Anschluss 64 mit einem Eingang 69 des Flip-Flop-Kreises 67, der Eingang 65 mit einem Zeitgeberanschluss 71 des Flip-Flops 67 und der Anschluss 66 mit Erde verbunden ist. Die Eingangsanschlüsse des Gatters 73 sind mit den Anschlüssen 64, 65 der Kodiereinrichtung 41 verbunden, während der Ausgang des Gatters 73 mit einem Rückstellanschluss 75 des Flip-Flop-Kreises 67 verbunden ist. Wenn das Rad 33 sich im positiven Sinne dreht, lässt der logische 1-Dateneingang des Flip-Flops 67 den Zeitgebereingang des Flip-Flops 67 um 90° verändern, so dass der Flip-Flop 67 ein logisches 1-Ausgangssignal erzeugt, welches mit dem logischen 1-Zeitgebereingangssignal des Flip-Flops 67 von der Kodiereinrichtung 41 synchronisiert ist. Wenn das Rad 33 negativ rotiert, lässt der logische 1-Zeitgebereingangsimpuls von der Kodiereinrichtung 41 zum Flip-Flop 67 den logischen 1-Dateneingangsimpuls des Flip-Flops von der Kodiereinrichtung 41 um 90° verändern, während der Ausgang vom Flip-Flop 67 ständig den logischen Wert aufweist. Das bedeutet, dass bei negativer Drehung des Rades 33 dann, wenn die Erntegutladung sich bei Rückziehen des Kolbens 25 in der Kammer 15 nach vorne hin ausdehnt wirksam ausgefiltert wird und zu keiner Erzeugung störender Vorschubsignale führt. Der Vorschubzähler kann durch einen üblichen 4-Bit-binären Zähler 43 führen. Der binäre Zähler 43 ist mit dem Ausgangsanschluss 77 des Flip-Flops verbunden und nimmt ein Vorschubsignal von der Kodiereinrichtung 41 auf und speichert dieses. Der Zähler 43 ist mit einem üblichen Abwärtszähler verbunden, welcher den zweiten Vorschubzähler 49 bildet und der das Vorschubsignal von dem Zähler 43 aufnimmt und speichert, und zwar in Abhängigkeit von einem Zeitsignal, das von dem Zeitgeberwandler 47 empfangen wird. Dieser wird durch einen Zeitgeberschalter 47 gebildet, der betätigt (geöffnet) wird durch einen Nocken, der mit einem Getriebeteil (nicht gezeigt) verbunden ist, welcher sich im Antriebszug des Ballens befindet und der einen synchronen Zyklus mit dem Kolben 25 ausführt. Das Zeitgebersignal von dem Zeitgeberschalter 47 wird zu dem Abwärtszähler 49 überführt, und zwar über einen Signalformkreis 50, der einen üblichen Eliminator 79 für Schliessimpulse und einen RC-Filter 85 aufweist. Beide dienen dazu, störende Schliesssignale vom Zeitgeberschalter 47 und einem monostabilen Multivibrator 81 auszufiltern und die Breite des Zeitgebersignals zu reduzieren. Der Multivibrator 81 ist mit einem eine Voreinstellung ermöglichenden Anschluss 83 des Abwärtszählers 49 verbunden. Der Zeitgeberimpuls an der Stelle A vom Ausgang des integrierten Kreises 79 liefert den Eingangsimpuls für den monostabilen Multivibrator 81, wo das Zeitgebersignal 87 in der Breite zu einem Impuls 89 (an der Stelle B) reduziert wird, welches für den Abwärtszähler 49 ein logisches 1-Signal zur Voreinstellung liefert.

Der Multivibrator 81 ist ausserdem mit einem Verzögerungskreis 53 verbunden, der durch einen monostabilen Multivibrator gebildet wird. In Abhängigkeit vom Eingang des Impulses 89 erzeugt der Multivibrator einen verzögerten Impuls 95 (an der Stelle C), der übermittelt wird (a) an einen Steuerschalter 55, der durch einen RS-Flip-Flop 96 und ein NOR-Gatter 98 gebildet wird und (b) einem Vorschubzähler 43, um diesen zurückzustellen und die Aufnahme eines neuen Signals beim nächsten Kolbenzyklus zu ermöglichen. Der RS-Flip-Flop 96 kann zwei NOR-Gatter 97, 99 aufweisen. Der verzögerte logisch-1-Zeitgeberimpuls 95 wird durch einen Stelleingang des Gatters 97 empfangen und löst einen logisch-1-Ausgangsimpuls 101 von dem Ausgangsanschluss Q des Gatters 99 aus. Dieser Impuls (an der Stelle D) wird gleichzeitig dem Ausgangstreiberkreis 59, der durch einen üblichen Transistorverstärker 59 zum Einschalten der durch Solenoid betätigten Ventile der Einbringungsanordnung 35 gebildet wird, und einem Zeitgeber 57 zugeführt, der durch einen spannungsgesteuerten Oszilator 57 gebildet wird. Der Impuls 101 schaltet den Verstärker 59 ein, der wiederum die Betätigungseinrichtung der Ventile der Einbringungsanordnung 35 einschaltet und betätigt. Der durch Spannung gesteuerte Oszilator 57 erzeugt eine Reihe von logisch-1-Impulsen 103 bis 106 (an der Stelle E), die durch eine Zeit T getrennt sind, welche proportional der Einstellung der Strömungsgeschwindigkeitssteuerung 61 ist, die wiederum durch ein Potentiometer gebildet wird. Die Impulse 103 bis 106 lesen den Zählwert in dem Abwärtszähler 49 schrittweise aus. Der Abstand oder die Zeitperiode zwischen aufeinanderfolgenden Impulsen 103 bis 106 kontrolliert somit die Zeitlänge, die erforderlich ist, den Zählwert im Abwärtszähler 49 auszuzählen, und damit letztlich die Zeitdauer, während der die Einbringungsanordnung 35 bei einem Vorschubsignal bestimmter Länge eingeschaltet bleibt. Wenn der Abwärtszähler 49 den Zählwert Null erreicht, stellt das NOR-Gatter den RS-Flip-Flop 55 zurück, indem ein logisch-1-Impuls dem Rückstellanschluss des Gatters 99 zugeführt wird. Dadurch wird ein logisch-Null-Ausgangssignal am Anschluss Q des Gatters 99 erzeugt. Die Rückstellung des Steuer-Flip-Flops 55 führt dazu, dass der Verstärker 59 ausgeschaltet wird, wodurch auch die Elektromagnete der Ventile der Einbringungsanordnung 35 abfallen, und schaltet ausserdem den durch Spannung gesteuerten Oszilator 57 ab.

Gemäss einem weiteren Merkmal der Anordnung liefert eine Messeinheit 51 ein analoges Auslegesignal für das Vorschubsignal bei jedem Kolbenzyklus. Die Einrichtung 51 ist mit dem Vorschubzähler über einen üblichen Digital/Analog-Wandler 113 verbunden. Dieser kann durch ein übliches Digitalgedächtnis oder eine Verriegelungseinrichtung 115 und eine R-2R-Widerstandsleiter 117 gebildet sein. Das Vorschubsignal von dem Vorschubzähler 43 wird in dem Digitalgedächtnis in Abhängigkeit von der Überführung des Zeitgebereingangs C1 von einem hohen Wert zu einem niedrigen Wert gespeichert, welcher durch die rücklaufende Kante des Impulses 89 des Multivibrators 81 erzeugt wird. Der Wert oder das Vorschubsignal, das in der Einrichtung 115 gespeichert ist, wird während eines hohen Zeitgeberniveaus überführt, wenn der für die Polarität massgebliche Anschluss P sich in dem logisch-1-Zustand befindet, was immer der Fall ist, wenn eine Gleichstromspannung ständig an dem Anschluss P anliegt. Die Datenüberführung während eines Zyklus des Kolbens 25 erfolgt somit während des nächsten Zyklus des Kolbens 25 durch den Eingang des nächsten Zeitgeberimpulses von dem Multivibrator 81 an der Einrichtung 115. Nachfolgend einer Datenüberführung während des hohen Zeitgeberniveaus wird das nächste Vorschubsignal vom Zähler 43 in der Einrichtung 115 in Abhängigkeit von dem Übergang von dem hohen Zustand zu dem niedrigen Zeitgeberzustand vom Multivibrator 81 gespeichert.

Bei Betrieb bringt das System 13 eine Erntegutbehandlungsflüssigkeit mit einer Geschwindigkeit ein, die in Abhängigkeit von der Ballenbildungsgeschwindigkeit steht. Die Ballenbildungsgeschwindigkeit wird gemessen durch Messung des Vorschubes der Heuladung in einer Ballenkammer 15, und zwar bei jedem Hub oder Zyklus des Presskolbens 25. Die Erntegutbehandlungsflüssigkeit wird in einer Menge eingebracht, die direkt proportional zu dem Vorschub der Heuladung durch die Kammer 15 ist. Die Heuladungsverschiebung wird gemessen durch eine Wellenkodiereinrichtung 41, welche die Drehung der Welle 34 misst, auf der das Rad 33 befestigt ist. Das Vorschubsignal wird in einem Vorschubzähler 43 gespeichert. Das Vorschubsignal von der Kodiereinrichtung 41 wird zu dem Vorschubzähler 43 über einen Richtungsfühler 45 übertragen, der jedes Vorschubsignal von der Kodiereinrichtung 41 ausfiltert, das auf einer Rückwärtsdrehung der Welle 34 beruht. Ein Zeitgeberschalter 47 erzeugt ein Zeitgebersignal während des Verdichtungshubes des Kolbens 25. Dieses Signal wird der Eliminationseinrichtung 79 für Schaltschliessimpulse zugeführt, um jede störende Vibration des Schalters 47 zu eliminieren. Ein Zeitgebersignal 87 betätigt einen monostabilen Multivibrator 81, um die Pulsweite 89 zu verringern, welcher Impuls dann die Übertragung des vorherigen Vorschubsignals, das in der Einrichtung 115 gespeichert ist, zu der Messeinrichtung 51 auslöst und das nächste Vorschubsignal von dem Vorschubzähler 43 zu dem Abwärtszähler 49 überführt. Das Zeitgebersignal 49 ist ein Uhrimpuls für die Einrichtung 115, um das vorhergehende Vorschubsignal durch die R-2R-Widerstandsleiter 117 zu der Messeinrichtung 51 zu führen, wo das Vorschubsignal als ein den Vorschub der Heuladung durch die Kammer 15 bei einem Kolbenzyklus 25 analoges Signal gebildet wird. Das Zeitgebersignal 89 wird weiter dem monostabilen Multivibrator 81 zugeführt, um einen verzögerten Impuls 95 zu bilden, der zur Rückstellung des Vorschubzählers 43 zur Aufnahme und Speicherung eines nächsten Vorschubsignals und einem RS-Flip-Flop 55 zugeführt wird, um ein logisch-1-Ausgangssignal für den Anschluss Q der Einrichtung 115 zu erzeugen. Der logisch-1-Ausgangsimpuls vom Anschluss Q des Flip-Flops 55 betätigt den Verstärker 59 und als Folge davon die elektromagnetischen Spulen der Ventile der Einbringungsanordnung 35. Ausserdem wird der durch Spannung gesteuerte Oszilator 57 betätigt. Die Ausgangspulse des Oszilators lösen zeitlich den programmierbaren Abwärtszähler 49 aus, bis dieser einen Zählwert Null erreicht, wodurch der Ausgang Q des Flip-Flops 55 in den niedrigen oder logisch-0-Zustand zurückgeführt wird. Dadurch wird der Verstärker 55 abgeschaltet, so dass die elektromagnetischen Spulen der Ventile abfallen und der Oszilator 57 ausgeschaltet wird. Jeder Impuls des Oszilators 57 repräsentiert eine Einheit der Verstellbewegung der Wellenkodiereinrichtung 41. Der zur Steuerung der Strömungsgeschwindigkeit dienende Potentiometer 61 stellt die Zeit zwischen den aufeinanderfolgenden Impulsen 103 bis 106 des Oszilators 57 ein. Hierdurch wird die Einschaltzeit der Solenoide der Steuerventile der Einbringungsanordnung 35 bestimmt und damit die Menge an Flüssigkeit, die dem Ballen pro Vorschubeinheit zugeführt wird. Die Einstellung des Potentiometers 61 basiert auf dem Feuchtigkeitsgehalt und damit der Dichte des Erntegutes, so dass die Einbringungsgeschwindigkeit optimiert wird. Dadurch wird das Vorschubsignal, welches in der Tat ein Volumenmesssignal ist, umgewandelt auf ein Gewichtssignal, in dem unabhängig die Erntegutfeuchtigkeit oder die Dichte bestimmt wird und das Potentiometer 61 eingestellt wird.

Die Erfindung ist vorstehend in Verbindung mit einem bevorzugten Ausführungsbeispiel beschrieben. Es ist ersichtlich, dass die Erfindung auch in anderer Weise verwirklicht werden kann. So kann eine positive Verdrängerpumpe an Stelle der durch Elektromagnet betätigten Ventile 179 als Mittel zur Einbringung diskreter Mengen an Flüssigkeit in Abhängigkeit von der variierenden Ballenbildungsgeschwindigkeit eingesetzt werden. In diesem Fall würde das Vorschubsignal dazu benutzt, die Menge an Flüssigkeit einzujustieren, die durch die Pumpe geliefert wird. All diese Möglichkeiten sollen mit umfasst sein.

## Patentansprüche

1. Anordnung an einer Presse zum Herstellen von Ballen aus Erntegut zum Einbringen einer Behandlungsflüssigkeit in das Erntegut während des Ausformens in einen Ballen, bei der mehrere die Behandlungsflüssigkeit verteilende, in das Erntegut eindringende Düsenelemente vorgesehen sind, von denen eine jede einen langgestreckten Schaft mit einem Längskanal und mehreren von dessen Ende ausgehenden Austrittsöffnungen für die Behandlungsflüssigkeit aufweist, dadurch gekennzeichnet, dass bei Verwendung einer stark flüchtigen Behandlungsflüssigkeit der Längskanal (155) einen Querschnitt aufweist, dessen Flächenausdehnung grösser ist als die kleinste Summe der Querschnittsflächen der Austrittsöffnungen (163–166), derart, dass bei Betrieb die flüchtige Behandlungsflüssigkeit in dem Längskanal (155) in ihrer flüssigen Form verbleibt.

2. Anordnung nach Anspruch 1, dadurch gekennzeichnet, dass jede Austrittsöffnung (157–160) aus einem gegenüber dem Längskanal (155) entsprechend verengten Bereich (157–160) und einer von diesem in Austrittsrichtung sich aufweitenden lippenförmigen Mündung (167–170) besteht.

3. Anordnung nach Anspruch 1 oder 2, dadurch gekennzeichnet, dass jedem Düsenelement (135 bis 142) ein elektromagnetisch betätigbares Schliessventil (179) in einem die flüchtige Behandlungsflüssigkeit in dem Längskanal (155) begrenzenden geringen Abstand von den Austrittsöffnungen (157–160) zugeordnet ist.

4. Anordnung nach einem der Ansprüche 1 bis 3, dadurch gekennzeichnet, dass in Durchströmrichtung unmittelbar vor den Austrittsöffnungen (157–160) jedes Düsenelementes, dessen Längskanal (189) ein Rückschlagventil (185, 187) zugeordnet ist.

5. Anordnung nach Anspruch 4, dadurch gekennzeichnet, dass die Schliesskraft des Rückschlagventils (185, 187) etwas grösser bemessen ist als der Dampfdruck der flüchtigen Behandlungsflüssigkeit unter den auf dem Feld üblicherweise herrschenden Temperaturen.

6. Anordnung nach einem der Ansprüche 3 bis 5, dadurch gekennzeichnet, dass an der Stirnwand (151) eines Presskolbens (25) der Presse Anschlussnippel (173) vorgesehen sind, an denen jeweils auf der Aussenseite der Stirnwand (151) die Düsen (135 bis 142) und jeweils auf der Innenseite der Stirnwand (151) die elektromagnetisch betätigbaren Schliessventile (179) angeschlossen sind.

### Claims

1. Arrangement on a press for producing bales from harvested material for introducing a treating fluid into the harvested material during the shaping into a bale under pressure, wherein a plurality of nozzle elements distributing the treating fluid and penetrating into the harvested material is provided, each of which has an elongated shank with a longitudinal duct and a plurality of outlet openings for the treating fluid starting from its end, characterised in that when a markedly volatile treating fluid is employed the longitudinal duct (155) as a cross-section the size of whose area is greater than the smallest sum of the cross-sectional areas of the outlet openings (163–166), so that, in operation, the volatile treating fluid in the longitudinal duct (155) remains in its fluid form.

2. Arrangement according to claim 1, characterised in that each outlet opening (157–160) (sic) consists of a zone (157–160) suitably narrowed with respect to the longitudinal duct (155) and a lip-shaped mouth (167–170) widening from this zone in the outlet direction.

3. Arrangement according to claim 1 or 2, characterised in that an electromagnetically operated closing valve (179) is associated with each nozzle element (135 to 142) at a small distance from the outlet openings (157–160) limiting the volatile treating fluid in the longitudinal duct (155).

4. Arrangement according to any one of claims 1 to 3, characterised in that immediately before the outlet openings (157–160) of each nozzle element in the direction of throughflow a non-return valve (185, 187) is associated with its longitudinal duct (189).

5. Arrangement according to claim 4, characterised in that the closing force of the non-return valve (185, 187) is rated a little greater than the vapour pressure of the volatile treating fluid under the temperatures usually prevailing in the field.

6. Arrangement according to any one of claims 3 to 5, characterised in that on the front wall (151) of a pressure plunger (25) of the press, connecting nipples (173) are provided to which the nozzles (135 to 142) are connected on the outside of the front wall (151) in each case and the electromagnetically operated closing valves (179) are connected on the inside of the front wall (151) in each case.

### Revendications

1. Dispositif prévu sur une presse pour la formation de balles à partir de produits de récolte, pour l'introduction d'un liquide de traitement dans les produits de récolte pendant la formation d'une balle dans lequel il est prévu plusieurs éléments en forme de buses répartissant ou distribuant le liquide de traitement et l'introduisant dans les produits de récolte, parmi lesquels chacun comporte un corps de forme allongée muni d'un canal longitudinal et plusieurs orifices de sortie ménagés à son extrémité pour le liquide de traitement, caractérisé en ce que, lors de l'utilisation d'un liquide de traitement fortement volatil, le canal longitudinal (155) présente une section droite dont la surface est supérieure à la plus petite somme des surfaces en section droite des orifices de sortie (163–166), de façon telle qu'en service le liquide de traitement volatil demeure dans le canal longitudinal (155) sous forme liquide.

2. Dispositif suivant la revendication 1, caractérisé en ce que que chaque orifice de sortie (157–160) est constitué par une zone (157–160) étranglée de façon appropriée par rapport au canal longitudinal (155) et par une embouchure en forme de lèvre (167–170) allant en s'élargissant depuis cette zone en direction de la sortie.

3. Dispositif suivant la revendication 1 ou 2, caractérisé en ce qu'il est prévu, pour chaque élément formant buse (135 à 142), une valve de fermeture (179) pouvant être actionnée par voie électromagnétique, disposée à une faible distance des orifices de sortie (157–160) afin de limiter la quantité de liquide de traitement volatil présent dans le canal longitudinal (155).

4. Dispositif suivant l'une quelconque des revendications 1 à 3, caractérisé en ce qu'un clapet de retenue (185, 187) est associé au canal longitudinal (189) de chaque élément formant buse, directement en avant des orifices de sortie (157–160) de cet élément formant buse quand on considère la direction d'écoulement.

5. Dispositif suivant la revendication 4, caractérisé en ce que la force de fermeture du clapet de retenue (185, 187) est un peu plus grande que la tension de vapeur du liquide de traitement volatil aux températures régnant habituellement sur le champ.

6. Dispositif suivant l'une quelconque des revendications 3 à 5, caractérisé en ce qu'il est prévu, sur la paroi terminale (151) d'un piston de presse (25) de la presse, des embouts de raccordement (173) auxquels chaque fois les buses (135 à
142) sont raccordées sur la face extérieure de la
paroi terminale (151) et auxquels chaque fois les valves de fermeture pouvant être actionnées par
voie électromagnétique (179) sont raccordées sur
la face intérieure de la paroi terminale (151).

FIG. 1

FIG. 2

FIG. 4

FIG. 3

FIG. 5

| TIMING PULSE Ⓐ | |
| LOAD DOWN COUNTER Ⓑ | |
| RESET DISPL. COUNTER Ⓒ | |
| SET OUTPUT DRIVER CONTROL FLIP-FLOP Ⓓ | |
| CLOCK Ⓔ | |
| VALVE PULSE Ⓕ | |

TIME

FIG. 8

FIG. 6

Diagram components:
- 25 BALER PLUNGER
- 47 TIMING TRANSDUCER
- 50 SHAPING CIRCUIT
- 53 DELAY CIRCUIT
- 55 CONTROL SWITCH
- 59 OUTPUT DRIVER
- 35 APPLICATOR
- 37 STORAGE TANK
- 13
- 61 FLUID RATE CONTROL
- 57 CLOCK
- 49 DISPLACEMENT COUNTER
- 52 DIGITAL ANALOG CONVERTER
- 51 METER
- 43 DISPLACEMENT COUNTER
- 45 DIRECTION SENSOR
- 41 DISPLACEMENT TRANSDUCER
- 33 BALE MEASURING WHEEL
- 39

FIG. 7a

*FIG. 7b*